# EUROPEAN PATENT SPECIFICATION

(11) **EP 0 384 304 B1**
(45) Date of publication and mention of the grant of the patent: **11.01.1995**
(21) Application number: 90102992.6
(22) Date of filing: 16.02.1990
(51) Int. Cl.: A23N 15/08, A23N 15/02

(54) **Method for removing roots from cormous plant bodies**
Verfahren zum Entfernen von Zwiebelgewächswurzeln
Méthode pour éliminer les racines des plantes bulbeuses

(30) Priority: 22.02.1989 JP 40382/89; 31.07.1989 JP 196935/89
(43) Date of publication of application: 29.08.1990
(73) Proprietor: WASEDA UNIVERSITY, Shinjuku-ku, Tokyo (JP); MITSUBISHI JUKOGYO KABUSHIKI KAISHA, Tokyo (JP)
(72) Inventor: Miwa, Yoshiyuki, Kodaira-shi, Tokyo, (JP); Kodama, Hiroshi, Shinjuku-ku, Tokyo, (JP); Murase, Takuya, Kita-ku, (JP); Shikae, Sadao, c/o Okinoerabu Biotech.Inst.Co.Ltd., Ooshima-gun, Kagoshima-ken, (JP); Nakagawa, Masaya, c/o Mitsubishi Jukogyo K.K., Chiyoda-ku, Tokyo, (JP); Kabumoto, Tsutomu, c/o Mitsubishi Jukogyo K.K., Chiyoda-ku, Tokyo, (JP)
(74) Representative: Schieferdecker, Lutz, Dipl.-Ing.

(56) References cited:
- DE-A- 3 605 639
- DE-C- 397 923
- US-A- 3 942 428

## Description

The present invention relates to a method for mechanically removing roots from harvested cormous plant bodies using a special root removing arrangement.

Heretofore, a farm work of root-removal or disrooting of cormous plants had been realized, in general, by hand work of farm laborers by handing the plant body or placing it on a chopping board one by one and cutting off the roots using a knife etc.

Upon the remarkable progress in the biotechnology in recent years, an intense expectation has arisen for realizing an industrial agriculare which allows a considerable increase in the harvest amount while spending man-labor. For such industrial agriculture, mechanization of various farm works is necessary and, in addition, aseptic operations should, in most cases, be incorporated in order to eliminate infections during planting and cultivating on, such as, an agrar culture medium which may probably be employed in such industrial agriculture.

In harvesting cormous plants, such as, lily, fritillary and so on, removal of beard-like roots (disrooting) from the collected plant bodies is one of the important harvesting works. Hitherto such works of disrooting were realized by hand work of farm laborers spending extensive time at a low labor efficiency with accompaniment of considerable danger of injury due to handling of knife etc. Furthermore, there is a high probability of transference of phytopathogenic bacteria from the laborer's body to the plant, if a laborer's work has to be interposed in such mechanized works for disrooting, what has been a large obstacle for such mechanization.

From US-A 3 942 428 it is known to use an arrangement for disrooting of cormous plant bodies (bulbs), this arrangement having at least one pair of parallely laid rollers, which are rotated in a counter sense in order to draw the beard-like roots of the plant body into the roller gap held at a suitable spacing. The plant bodies are oriented beneath the rollers without any contact with the rollers by manual handling, so that the roots face upwardly. Then the bulbs are thrown upwardly for the roots to be catched between the rollers. Accordingly, if the posture of rooted plants is not set by manual power it becomes random so that the roots of some plants cannot be removed by mechanical automation only.

Therefore it is an object of the present invention to obviate the difficulties mentioned above and to propose an automated mechanical method for removing roots from cormous plant bodies which offers high work performance and relieves danger of injury of laborer and prevents transfer of phytopathogenic bacteria from the laborer to the plants.

This object is achieved by the present invention as defined in the accompanying claim.

In case that, in the root removal method according to the present invention, the rotational sense of the two parallel rollers laid so as to leave a small gap between them is the same or, when they are rotating in such a counter sense to each other that their inwards opposing inner sides are moving upwards, the plant body of a cormous plant placed on the rollers in the intersticial portion of them will roll thereon and soon takes a balanced or stable posture with their plant stem or plant axis extending parallel to the axial direction of the rollers. By changing over the rotational mode of the two rollers from this state into a root-involution mode in which they are held in such a counter-wise rotation to each other that said inwards opposing inner sides of the rollers are moving downwards, the beard-like roots of the plant body will be rolled into the roller gap, namely, the gap between the rollers, and subject to towing by the friction force on the rotating rollers. If, in this occasion, the plant body is pushed aside, i.e. in axial direction of the rollers by means of a plant body thrusting mechanism, the beard-like roots which have been rolled into the roller gap will now be plucked off from the plant body held retained on the parallel rollers and the so disrooted plant bodies will fall down into, a collector bunker or such like outside the root removing arrangement.

Since the plant body, i.e. the stem and the bulb, is sufficiently larger than the beard-like roots, it will, at a quite high probability, be retained on the rollers without being drawn into the gap between the rollers. By constructing the roller pair asymmetrically so that one has a larger diameter than the other, possibility of rolling small size plant bodies into the roller gap can be far more decreased.

If the diameters of the rollers are excessively large with respect to the size of the plant body, the possibility of rolling the plant bodies into the roller gap becomes intolerably high. Such a danger can be avoided by selecting the diameters of the rollers within a suitable range and determining the ratio of the two asymmetrical roller diameters at an adequate value, since the diameter of the plant body is quite larger than that of the beard-like roots.

Fig. 1 is a perspective view of an embodiment of the root removing arrangement according to the present invention.

Fig. 2 illustrates a typical state of operation of the root removing arangement having the rollers rotating in the same sense, with a plant body of a lily supplied on the rollers and kept rolling thereon to take an axial balanced posture with beard-like roots being not rolled into the roller gap.

Fig. 3 is a side view of Fig. 2.

Fig. 4 illustrates schematically the state of operation of the root removing arrangement of Fig. 2 just after the rotation mode of the roller pair is changed over into root-involution mode.

Fig. 5 illustrates schematically a state after the condition shown in Fig. 4, in which the beard-like roots have been rolled into the roller gap before they are plucked off from the bulb.

Below, the invention shall be described concretely by way of an Example of root removal of a bulbous lily.

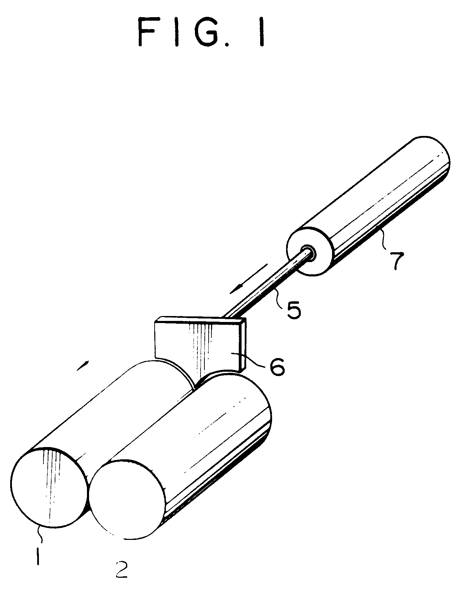

A root removing arrangement employed in this Example is illustrated in Figs. 1 to 3, in which a plant body of a bulbous lily having beard-like roots is supplied on a pair of rollers 1 and 2. These rollers 1 and 2 are rotatably disposed parallel to each other leaving a roller gap of an adequate spacing therebetween and are each lined by a coating of hard rubber.

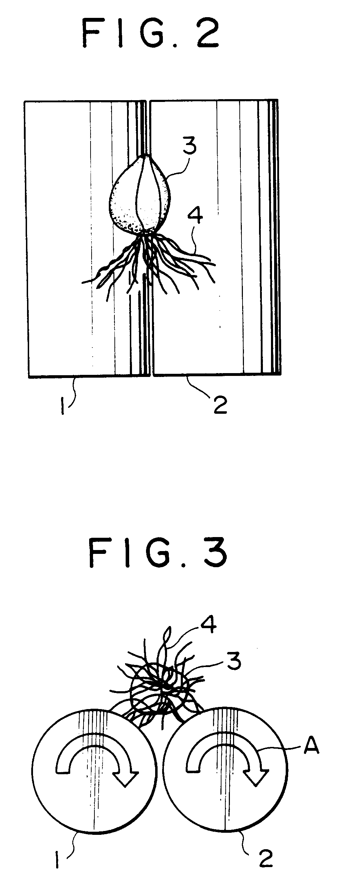

In the first operation step of the arrangement, the roller pair is run in a parallel rotation mode, namely, in rotation in the same sense as shown in Fig. 3 by the arrows A. The plant body 3 to be subjected to root removal is supplied in this state onto the pair of rollers in their intersticial portion. The plant body 3 rolls between the two rollers 1 and 2 and soon takes its balanced or stable posture with its plant axis extending in the axial direction of the rollers, even though it is supplied in any voluntary posture onto the roller pair. Here, it brings about the same result, whether the rollers are rotated in clockwise or in counterclockwise sense.

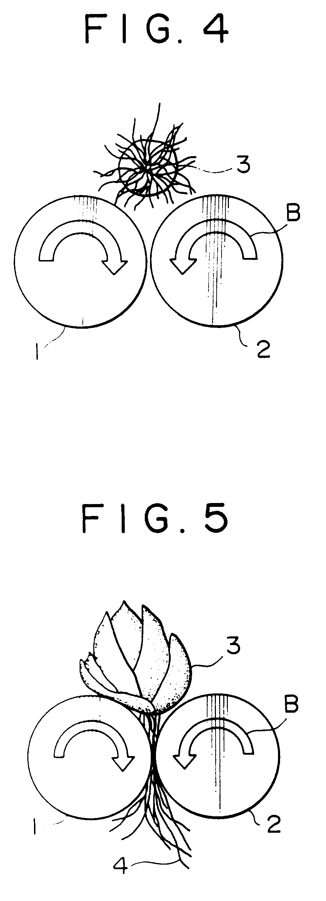

After the stable posture of the plant body 3 has been reached, the rotation of one of the rollers 1 and 2 is inverted in the second operation step of the arrangement, so as to realize such a counterwise rotation that the internally opposing sides of the pair of rollers 1 and 2 are moving both downwards, as shown in Fig. 4 by the arrows B. By this operation of the rollers, the flexible beard-like roots 4 are involved into the roller gap by the friction force on the rollers, while the bulb or corm and the stem of the plant are held retained on the rollers 1 and 2 since they are large enough to withstand such involution force.

Then, a plant body thrusting mechanism in a form of, for example, an axially slidable piston 5 and a cylinder 7 therefor as shown in Fig. 1 is actuated in the third operation step, so as to push the plant body forward by a sweeper plate 6 arranged at the top of the piston 5. This operation causes the beard-like roots involved in between the two rollers to be plucked from the bulb 3 and the thus disrooted plant body is swept off from the rollers into a suitable collector means outside the root removing arrangement.

While the example herein suggests the use of rollers coated by hard rubber in order to provide enough friction to be imparted to beard-like roots of larger thickness, it is feasible to select an adequate material so as to meet each specific requirement on application taking account of the strength, flexibility, hardness and so on of the roots to be removed. The roller diameter should be determined suitably for plants to be treated, as suggested previously, to adapt to their size, hardness flexibility and so on, together with the suitable adjustment of distance or spacing of the roller gap, rotation speed of the rollers, diameter ratio of the two rollers of asymmetrical diameters if incorporated and so on.

The plant body thrusting mechanism can be realized by any other suitable means and can be actuated by, such as, electric motor or the like.

According to the novel method of the present invention, it is now possible, as illustrated in the Example, to mechanize works for root removal for various cormous plants that were heretofore carried out only by hand work of farm laborer. Thus, it offers high work efficiency with economy of energy and improvement of safety secure against injury accident, in addition to possibility of complete aseptic operation. Therefore, the present invention can be applied advantageously not only to conventional agricultural works but also to industrial agriculture operating with large amount of plant bodies and even to "plant factory" in the future.

## Claims

1. A method for mechanically removing roots from harvested cormous plant bodies using a special root removing arrangement having at least one pair of parallely laid rollers, which are rotated in a counter sense in order to draw the beard-like roots of the plant body into the roller gap held at a suitable spacing, **characterized by**
supplying the harvested cormous plant bodies from above in between the two rollers while these are rotating in the same rotational sense or in such a counter sense to each other that their inwards opposing inner sides are moving upwards, in order to let the plant body roll on the rollers and take its balanced, substantially axially of the rollers directed posture,
changing over the rotation mode of the rollers into a rotation mode of such a counter sense to each other that their inwards opposing inner sides are moving downwards, in order to draw the beard-like roots of the plant body into the roller gap,
forcing the plant body aside from the rollers by means of a plant body thrusting mechanism so as to cause the roots to be plucked from the plant body and
discharging the so disrooted plant body out of the root removing arrangement.

## Patentansprüche

1. Verfahren zum mechanischen Entfernen der Wurzeln von geernteten Zwiebelgewächsen unter Verwendung einer speziellen Wurzelentfernungseinrichtung mit wenigstens einem Paar von parallelen Walzen, die gegensinnig angetrieben werden, um die bartartigen Wurzeln der Knolle in den Walzenspalt einzuziehen, der auf eine geeignete Weite eingestellt ist, **gekennzeichnet durch**
Zuführen der geernteten Zwiebelgewächse von oben zwischen die zwei Walzen, während diese sich gleichsinnig oder derart gegensinnig drehen, daß ihre einwärts gegenüberliegenden Innenseiten sich nach oben bewegen, damit die Knolle auf den Walzen rollt und eine balancierte, im wesentlichen axial zu den Walzen gerichtete Stellung einnimmt,
Übergang des Drehmodus der Walzen in einen gegensinnigen Drehmodus derart, daß ihre einwärts gegenüberliegenden Innenseiten sich nach unten bewegen, um die bartartigen Wurzeln der Knolle in den Walzenspalt einzuziehen,
seitliche Verlagerung der Knolle unter Krafteinwirkung gegenüber den Walzen mittels einer Knollenschubvorrichtung, um die Wurzeln von der Knolle abzureißen, und
Abgabe der so entwurzelten Knollen aus der Wurzelentfernungseinrichtung.

## Revendications

1. Procédé pour éliminer mécaniquement les racines des corps de plantes bulbeuses récoltées en utilisant un agencement spécial pour éliminer les racines, comprenant au moins une paire de rouleaux disposés en parallèle, qui sont mis en rotation en sens inverse dans le but de tirer les racines formant barbe du corps de plante dans l'écartement des rouleaux maintenu à un espacement adéquat,
caractérisé par
l'apport de corps de plantes bulbeuses récoltées, par le dessus, entre les deux rouleaux tandis que ceux-ci sont en rotation dans le même sens de rotation ou dans un sens contraire l'un par rapport à l'autre tel que leurs côtés intérieurs s'opposant vers l'intérieur, se déplacent vers le haut, dans le but de laisser le corps de plante rouler sur les rouleaux et prendre sa position équilibrée dirigée sensiblement axialement par rapport aux rouleaux,
le changement de sens du mode de rotation des rouleaux en un mode de rotation en sens contraire l'un par rapport à l'autre tel que leurs côtés intérieurs s'opposant vers l'intérieur, se déplacent vers le bas, dans le but de tirer les racines formant barbe, du corps de plante dans l'écartement des rouleaux,
le déplacement par poussée du corps de plante sur le côté des rouleaux, au moyen d'un mécanisme pousseur de corps de plante de manière à entraîner les racines à être arrachées du corps de plante et
le déchargement du corps de plante ainsi privé de racines hors de l'agencement d'élimination des racines.
